(19) **Europäisches Patentamt / European Patent Office / Office européen des brevets**

(11) **EP 4 266 112 B1**

(12) **EUROPEAN PATENT SPECIFICATION**

(45) Date of publication and mention
of the grant of the patent:
**29.07.2026  Bulletin 2026/31**

(21) Application number: **21934552.7**

(22) Date of filing: **05.11.2021**

(51) International Patent Classification (IPC):
*G02B 27/01* (2006.01)    *B32B 17/00* (2006.01)
*B32B 27/00* (2006.01)    *B32B 17/10* (2006.01)
*B32B 7/12* (2006.01)    *B32B 1/00* (2024.01)
*B32B 3/26* (2006.01)    *B32B 27/30* (2006.01)
*C03C 17/34* (2006.01)    *B60K 35/231* (2024.01)
*B60K 35/60* (2024.01)    *B60K 35/81* (2024.01)

(52) Cooperative Patent Classification (CPC):
G02B 27/0101; B32B 1/00; B32B 3/263;
B32B 7/12; B32B 17/10036; B32B 17/10091;
B32B 17/1011; B32B 17/10119; B32B 17/10201;
B32B 17/10568; B32B 17/10761; B32B 27/30;
B60K 35/231; B60K 35/60; B60K 35/81;    (Cont.)

(86) International application number:
**PCT/CN2021/129114**

(87) International publication number:
**WO 2022/205916 (06.10.2022 Gazette 2022/40)**

(54) **HEAD-UP DISPLAY SYSTEM**

HEAD-UP-ANZEIGESYSTEM

SYSTÈME D'AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.03.2021  CN 202110330372**

(43) Date of publication of application:
**25.10.2023  Bulletin 2023/43**

(73) Proprietor: **Fuyao Glass Industry Group Co., Ltd.**
**Fuqing, Fujian 350300 (CN)**

(72) Inventors:
• **TSO, Fai**
  **Fuzhou, Fujian 350301 (CN)**
• **HE, Lishan**
  **Fuzhou, Fujian 350301 (CN)**
• **ZENG, Dong**
  **Fuzhou, Fujian 350301 (CN)**

• **ZHANG, Xiaorong**
  **Fuzhou, Fujian 350301 (CN)**
• **HUANG, Fengzhu**
  **Fuzhou, Fujian 350301 (CN)**
• **CHEN, Guofu**
  **Fuzhou, Fujian 350301 (CN)**
• **FUKUHARA, Kohta**
  **Fuzhou, Fujian 350301 (CN)**

(74) Representative: **Mewburn Ellis LLP**
**Aurora Building**
**Counterslip**
**Bristol BS1 6BX (GB)**

(56) References cited:
CN-A- 1 732 404    CN-A- 104 267 498
CN-A- 110 520 295    CN-A- 112 513 716
CN-A- 112 513 716    CN-A- 113 031 276
CN-B- 104 267 498    US-A1- 2019 285 882
US-A1- 2022 179 208

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**(Cont. next page)**

(52) Cooperative Patent Classification (CPC): (Cont.)
**C03C 17/3435;** B32B 2255/20; B32B 2255/28;
B32B 2307/412; B32B 2307/416; B32B 2307/418;
B32B 2307/7376; B32B 2457/20; B32B 2605/08;
C03C 2217/734; G02B 2027/0116;
G02B 2027/0118; G02B 2027/012; G02B 2027/0194

**Description**

TECHNICAL FIELD

This disclosure relates to the field of a head up display technology, and more particularly to a Head up display system with a transparent nano film for image display, and the disclosure specifically provides a Head up display system capable of eliminating deficiencies of Head up display images such as being reddish or yellowish.

BACKGROUND

A Head up display (HUD) system is increasingly configured on a vehicle, such that important driving information such as speed, engine revolutions per minute (rpm), fuel consumption, tire pressure, navigation, and information from an external smart device, can be displayed in real time on a front windshield in a field of view of a driver. As such, the driver does not need to look down to see the driving information, thereby avoiding distraction from a road ahead. Moreover, the driver does not need to adjust the line of sight between a distant road and near instrumentation, which can avoid eye strain, greatly enhance driving safety, and improve driving experience.

The Head up display system also has a problem of ghosting along with projected information display, i.e., there may be a secondary image that can be recognized by human eyes in addition to a main image observed by the human eyes. In order to mitigate or remove the secondary image, a traditional method is to use wedge-shaped laminated glass as a front windshield. For example, use of wedge-shaped polyvinyl butyral (PVB) as an intermediate layer of laminated glass or one glass pane of the laminated glass having a wedge-shaped cross section is disclosed in patents CN105793033B, CN111417518A, and CN110709359A.

P-polarized light and a conductive coating are also used to generate HUD images in the prior art such as patent DE102014220189A1 and Chinese patents CN110520782A, CN111433022A, and CN 111433023 A. As such, functions such as heat insulation and/or electric heating can also be implemented at the same time when a Head up display function is implemented, and therefore higher optical and electrical performance of the conductive coating are both required. In actual product application, it has been found that the HUD images generated by reflection of the P-polarized light are prone to color shift, which makes the HUD images have deficiencies such as being reddish or yellowish, thus seriously affecting beauty and quality of the HUD images.

CN104267498A relates to the technical field of display of a lifting head, and in particular, to a lifting head display system on a vehicle. The head-up display system comprises a projection light source and an interlayer glass, and further comprises a transparent nanofilm, wherein the transparent nanofilm comprises a laminated structure of at least one high refractive index layer/low refractive index layer sequentially deposited from the surface of an inner glass plate to the outside; The projection light source is used for generating P-polarized light, wherein the P-polarized light is incident on the transparent nanofilm, the reflectance of the transparent nanofilm on the P-polarized light is not less than 5%, and the incident angle of the P-polarized light is 42 degrees or 72 degrees.

SUMMARY

Aspects of the invention are set out in the appended claims. A Head up display system for higher-quality HUD images is provided in the disclosure, which aims to solve a technical problem of Head up display images that are prone to deficiencies such as being reddish or yellowish.

To this end, a Head up display system is provided in the disclosure. The Head up display system includes a projection light source and laminated glass. The laminated glass includes an outer glass pane, an inner glass pane, and an intermediate adhesive layer sandwiched between the outer glass pane and the inner glass pane. The Head up display system further includes a transparent nano film, where the transparent nano film is deposited on a surface of the inner glass pane away from the intermediate adhesive layer. The transparent nano film includes at least one laminated structure consisting of a high refractive-index layer/a low refractive-index layer, where the high refractive-index layer/the low refractive-index layer is deposited sequentially outwards from the surface of the inner glass pane. The high refractive-index layer has a refractive index greater than or equal to 1.8, and the low refractive-index layer has a refractive index less than or equal to 1.6. The projection light source is configured to generate P-polarized light, where the P-polarized light is incident on the transparent nano film at an angle of incidence ranging from 55° to 75°. A ratio of near-red light reflectivity $R1$ at wavelengths ranging from 580 nm to 680 nm of the laminated glass with the transparent nano film to near-blue light reflectivity $R2$ at wavelengths ranging from 420 nm to 470 nm of the laminated glass with the transparent nano film is $R1/R2=1.0$~$2.0$, wherein the near-red light reflectivity $R1$ and the near-blue light reflectivity $R2$ are measured and calculated according to international organization for standardization (ISO) 9050.

In the P-polarized light incident on the transparent nano film, a ratio of proportion $T1$ of near-red light with the wavelengths ranging from 580 nm to 680 nm to proportion $T2$ of near-blue light with the wavelengths ranging from 420 nm to 470 nm is T1/T2=0.1~0.9.

Preferably, a difference between a refractive index of the intermediate adhesive layer and a refractive index of the inner glass pane is less than or equal to 0.1.

Preferably, the intermediate adhesive layer has a wedge-shaped cross-sectional profile, and the wedge-shaped cross-sectional profile has a wedge angle ranging from 0.01 milli-radians (mrad) to 0.18 mrad.

The laminated glass with the transparent nano film has the reflectivity for the P-polarized light greater than or equal to 15 %.

Preferably, the laminated glass with the transparent nano film has the reflectivity for the P-polarized light greater than or equal to 20 %.

Preferably, at least one high refractive-index layer has a refractive index greater than or equal to 2.5 and a thickness ranging from 45 nm to 75 nm.

Preferably, at least one high refractive-index layer includes at least two high refractive-index sub-layers, where at least one of the at least two high refractive-index sub-layers has a refractive index greater than or equal to 2.5, and at least another of the at least two high refractive-index sub-layers has a refractive index ranging from 1.8 to 2.2.

Preferably, at least one high refractive-index layer includes two first high refractive-index sub-layers and one second high refractive-index sub-layer. Each of the two first high refractive-index sub-layers has a refractive index ranging from 1.8 to 2.2, and the second high refractive-index sub-layer has a refractive index greater than or equal to 2.5. The second high refractive-index sub-layer is disposed between the two first high refractive-index sub-layers. More preferably, the refractive index of the second high refractive-index sub-layer is at least 0.5 greater than the refractive index of each of the two first high refractive-index sub-layers.

Preferably, in the P-polarized light incident on the transparent nano film, a ratio of proportion T1 of near-red light with the wavelengths ranging from 580 nm to 680 nm to proportion T2 of near-blue light with the wavelengths ranging from 420 nm to 470 nm is T1/T2=0.4~0.8.

Preferably, the Head up display system further includes a light-filtering component, the light-filtering component is located on an optical path of the P-polarized light, and the light-filtering component has a transmittance for the P-polarized light greater than or equal to 80 %.

Preferably, the Head up display system further includes a projection control system, the projection control system is used to control the projection light source to generate the P-polarized light, and the projection control system is configured to perform a color filtering processing algorithm.

Preferably, the outer glass pane is a bent glass pane with a thickness greater than or equal to 1.8 mm, and the inner glass pane is a bent glass pane with a thickness less than or equal to 1.6 mm.

Preferably, the inner glass pane has a thickness ranging from 0.7 mm to 1.2 mm, and the inner glass pane is made of a chemically strengthened soda-lime-silica glass, a chemically strengthened aluminosilicate glass, a chemically strengthened borosilicate glass, a body strengthened soda lime silicate glass, an body strengthened aluminosilicate glass, or an body strengthened borosilicate glass.

Preferably, the ratio of the near-red light reflectivity R1 to the near-blue light reflectivity R2 is R1/R2=1.07~1.9.

The Head up display system in the disclosure can generate clear HUD images without visual ghosting, and eliminate deficiencies of the HUD images such as being reddish or yellowish, which can obtain higher-quality Head up display images. Furthermore, the Head up display system in the disclosure can generate the Head up display images in neutral color, and the Head up display images can be more colorful to implement full-color display, for example, to display marks or symbols in different colors such as red, green, blue, yellow, orange, or white in a Head up display image at the same time. Moreover, the Head up display system in the disclosure can also implement full-color display at a lower cost, thereby reducing a cost of a selected projection light source.

BRIEF DESCRIPTION OF THE DRAWINGS

FIG. 1 is a schematic structural diagram illustrating a Head up display system in the disclosure.

FIG. 2A is a schematic structural diagram illustrating a transparent nano film with one laminated structure in the disclosure.

FIG. 2B is a schematic structural diagram illustrating a transparent nano film with two laminated structures in the disclosure.

FIG. 2C is a schematic structural diagram illustrating a transparent nano film with three laminated structures in the disclosure.

FIG. 3A is a schematic structural diagram illustrating a transparent nano film with a high refractive-index layer including two sub-layers in the disclosure.

FIG. 3B is a schematic structural diagram illustrating a transparent nano film with a low refractive-index layer including two sub-layers in the disclosure.

FIG. 3C is a schematic structural diagram illustrating a transparent nano film with a high refractive-index layer including three sub-layers in the disclosure.

## DETAILED DESCRIPTION

The following will further illustrate contents in the disclosure with reference to accompanying drawings.

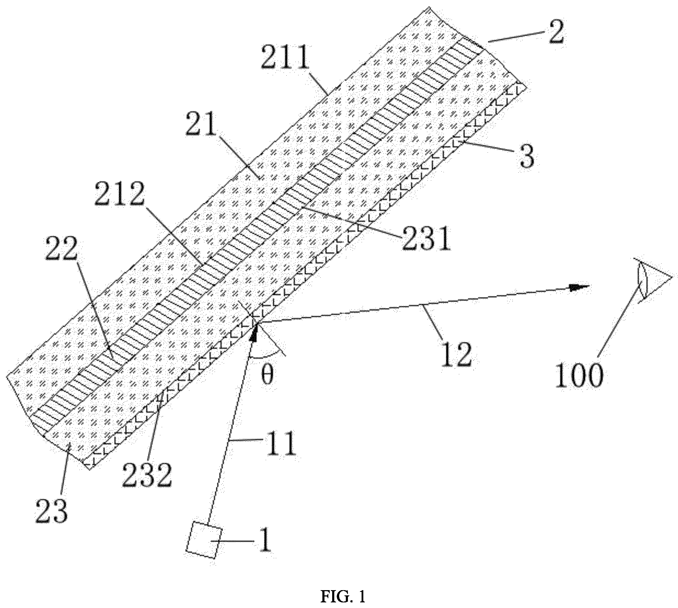

As illustrated in FIG. 1, a Head up display system in the disclosure includes a projection light source 1 and laminated glass 2. The laminated glass 2 includes an outer glass pane 21, an inner glass pane 23, and an intermediate adhesive layer 22 sandwiched between the outer glass pane 21 and the inner glass pane 23. The Head up display system further includes a transparent nano film 3 for removing ghosting, where the transparent nano film 3 is deposited on a surface of the inner glass pane 23 away from the intermediate adhesive layer 22, where the surface is denoted as a fourth surface 232. The projection light source 1 is configured to generate P-polarized light 11, where the P-polarized light 11 is incident on the transparent nano film 3 at an angle of incidence ranging from 55° to 75°. The laminated glass 2 with the transparent nano film 3 has a reflectivity for the P-polarized light 11 greater than or equal to 8%. In the disclosure, when the P-polarized light 11 is incident at the angle of incidence ranging from 55° to 75°, a reflectivity for the P-polarized light 11 is lower at a glass-air interface while is higher at the transparent nano film 3, such that only a reflected image from the transparent nano film will be observed as a main image when visually observing reflected images on the laminated glass, thereby removing visual ghosting.

In the disclosure, the outer glass pane 21 has a first surface 211 and a second surface 212. The first surface 211 is disposed facing an outside of a vehicle and away from the intermediate adhesive layer 22, and the second surface 212 is close to the intermediate adhesive layer 22. The inner glass pane 23 has a third surface 231 and the fourth surface 232. The third surface 231 is close to the intermediate adhesive layer 22, and the fourth surface 232 is disposed facing an inside of the vehicle and away from the intermediate adhesive layer 22. The second surface 212 and the third surface 231 are bonded through the intermediate adhesive layer 22 to form the laminated glass 2.

The intermediate adhesive layer 22 can be made of at least one of polycarbonate (PC), polyvinyl chloride (PVC), polyvinyl butyral (PVB), ethylene vinyl acetate (EVA), polyacrylate (PA), polymethyl methacrylate (PMMA), ionic interlayer (SGP), polyurethane (PU), etc. Preferably, a difference between a refractive index of the intermediate adhesive layer 22 and a refractive index of the inner glass pane 23 is less than or equal to 0.1, to obtain higher-quality Head up display images. The intermediate adhesive layer 22 may be a single-layer structure or a multi-layer structure, where the multi-layer structure may exemplarily include a double-layer structure, three-layer structure, four-layer structure, and five-layer structure. The intermediate adhesive layer 22 may also have other functions, e.g., reduction of interference of sunlight to human eyes by setting at least one colored area as a shadow band, sun protection or heat insulation by adding infrared absorbents, ultraviolet (UV) insulation by adding UV absorbents, or sound insulation by adding more plasticizers to one of the intermediate adhesive layer 22 of the multi-layer structure. In order to remove transmitted ghosting generated by a scenery in an external environment of the vehicle through a windshield, preferably, the intermediate adhesive layer 22 has a wedge-shaped cross-sectional profile, and the wedge-shaped cross-sectional profile has a wedge angle ranging from 0.01 milli-radians (mrad) to 0.18 mrad, e.g., 0.01 mrad, 0.02 mrad, 0.03 mrad, 0.04 mrad, 0.05 mrad, 0.06 mrad, 0.07 mrad, 0.08 mrad, 0.09 mrad, 0.10 mrad, 0.11 mrad, 0.12 mrad, 0.13 mrad, 0.14 mrad, 0.15 mrad, 0.16 mrad, 0.17 mrad, or 0.18 mrad. As such, by using merely the intermediate adhesive layer 22 with a smaller wedge angle, both reflected ghosting and transmitted ghosting can be removed at low-cost, thereby obtaining a higher-quality Head up display image and a better observation effect.

In FIG. 1, the P-polarized light 11 generated by the projection light source 1 is incident on the transparent nano film 3 at the angle of incidence θ ranging from 55° to 75°, and the transparent nano film 3 will directly reflect part of the P-polarized light 11 as reflected light 12. The reflected light 12 can directly enter into eyes of an observer 100 to form a Head up display main image. Since the transparent nano film 3 is relatively thin and the angle of incidence θ is close to the Brewster angle (about 57°), the part of the P-polarized light 11 incident into the transparent nano film 3 is basically un-reflected on the fourth surface 232 and has a basically unchanged propagation direction. Reflected light of the P-polarized light entered the laminated glass 2 then enters the eyes of the observer 100 but has an intensity being weak and even close to zero, such that ghosting can hardly be observed by the observer 100. In this case, the Head up display image is clear without visual ghosting and thus has a better display effect.

The projection light source 1 is configured to output on the laminated glass 2 relevant texts and image information, such as speed, engine revolutions per minute (rpm), fuel consumption, tire pressure, dynamic navigation, night vision, or live map, which then can be observed by the observer 100 in the vehicle, therefore implementing Head up display, and even strengthening augmented reality-HUD (AR-HUD). The projection light source 1 is a component known to those skilled in the art, which includes, but is not limited to, a laser, a light-emitting diode (LED), a liquid crystal display (LCD), digital light processing (DLP), electroluminescent (EL), a cathode ray tube (CRT), a vacuum fluorescent tube (VFD), a collimator lens, a spherical correction mirror, a convex lens, a concave lens, a reflection mirror, and/or a polarizer.

In this case, a position and an angle of incidence of the projection light source 1 are adjustable to be adapted to different positions or heights of observers 100 in the vehicle.

The laminated glass 2 with the transparent nano film 3 can directly reflect at least 8% of the P-polarized light 11 to form the Head up display main image. The transparent nano film 3 specifically includes at least one laminated structure consisting of a high refractive-index layer 31 and a low refractive-index layer 32, where the high refractive-index layer 31 and the low refractive-index layer 32 is deposited sequentially outwards from the fourth surface 232 of the inner glass pane 23. The high refractive-index layer 31 has a refractive index greater than or equal to 1.8. Preferably the refractive index is greater than or equal to 2.0. More preferably the refractive index is greater than or equal to 2.2. Furthermore, the high refractive-index layer 31 may be made of at least one of: oxides of zinc (Zn), stannum (Sn), titanium (Ti), niobium (Nb), zirconium (Zr), nickel (Ni), indium (In), aluminium (Al), cerium (Ce), tungsten (W), molybdenum (Mo), antimony (Sb), or bismuth (Bi) or mixtures thereof, or nitrides or nitrogen oxides of silicon (Si), Al, Zr, yttrium (Y), Ce, or lanthanum (La) or mixtures thereof, which specifically may be $TiO_x$, $NbO_x$, $HfO_2$, $ZnSnO_x$, $TaO_x$, $MoO_x$, $ZrO_x$, $CeO_2$, $WO3$, $BiO_x$, or $SiZrN_x$. The low refractive-index layer 32 has a refractive index less than or equal to 1.6. Preferably the refractive index is less than or equal to 1.5. Furthermore, the low refractive-index layer 32 may be made of at least one of $SiO_2$, $Al_2O_3$, or mixtures thereof, which specifically may be $SiAlO_x$.

Preferably, the reflectivity of the laminated glass 2 with the transparent nano film 3 for the P-polarized light 11 is greater than or equal to 15%. Specifically, for the laminated glass 2 with the transparent nano film 3, a ratio of near-red light reflectivity R1 at wavelengths ranging from 580 nm to 680 nm to near-blue light reflectivity R2 at wavelengths ranging from 420 nm to 470 nm is R1/R2=1.0~2.0, e.g., 1.0, 1.1, 1.2, 1.3, 1.4, 1.5, 1.6, 1.7, 1.8, 1.9, or 2.0. More preferably R1/R2=1.07~1.9. As such, more P-polarized light can be reflected to obtain higher-quality Head up display images.

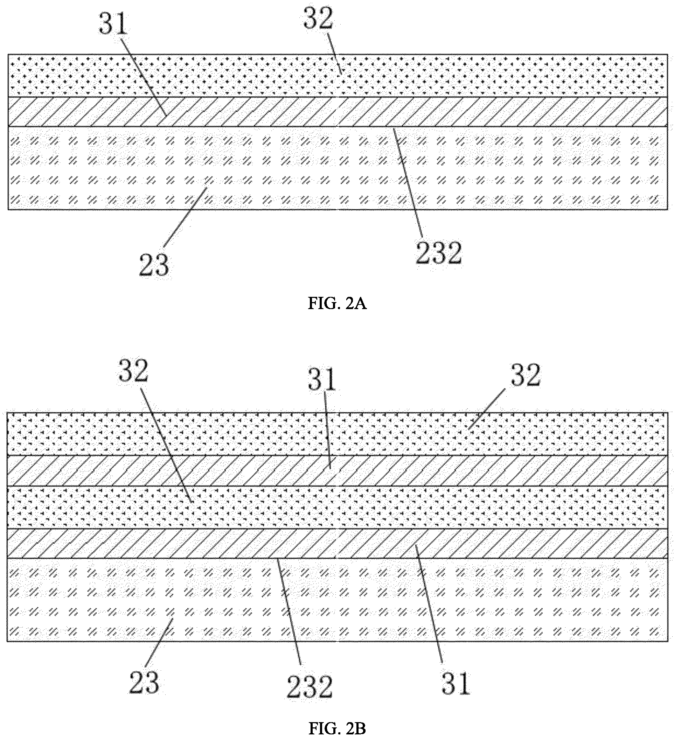

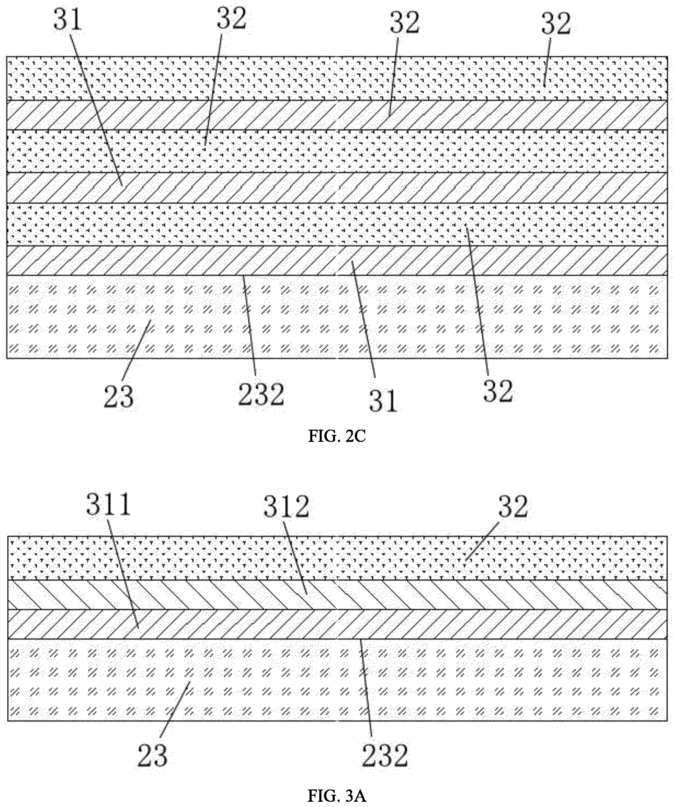

As illustrated in FIG. 2A, for example, the transparent nano film 3 includes one laminated structure consisting of a high refractive-index layer 31 and a low refractive-index layer 32, i.e., the inner glass pane 23/the high refractive-index layer 31/the low refractive-index layer 32. As illustrated in FIG. 2B, for example, the transparent nano film 3 includes two laminated structures each consisting of a high refractive-index layer 31 and a low refractive-index layer 32, i.e., the inner glass pane 23/a first high refractive-index layer 31/a first low refractive-index layer 32/a second high refractive-index layer 31/a second low refractive-index layer 32. As illustrated in FIG. 2C, for example, the transparent nano film 3 includes three laminated structures each consisting of a high refractive-index layer 31 and a low refractive-index layer 32, i.e., the inner glass pane 23/a first high refractive-index layer 31/a first low refractive-index layer 32/a second high refractive-index layer 31/a second low refractive-index layer 32/a third high refractive-index layer 31/a third low refractive-index layer 32. For another example, the transparent nano film 3 may include four laminated structures each consisting of a high refractive-index layer 31 and a low refractive-index layer 32, i.e., the inner glass pane 23/a first high refractive-index layer/a first low refractive-index layer/a second high refractive-index layer/a second low refractive-index layer/a third high refractive-index layer/a third low refractive-index layer/a fourth high refractive-index layer/a fourth low refractive-index layer. In this way, the transparent nano film 3 can have excellent mechanical, chemical, and thermal stability and ensure excellent durability with the reasonably-designed film-layer materials and film-layer thicknesses of the high-refractive index layer and the low-refractive index layer. Preferably, the reflectivity of the transparent nano film 3 for the P-polarized light 11 is greater than or equal to 20%, thereby obtaining higher-quality Head up display images. Specifically, at least one high refractive-index layer has a refractive index greater than or equal to 2.5 and a thickness ranging from 45 nm to 75 nm.

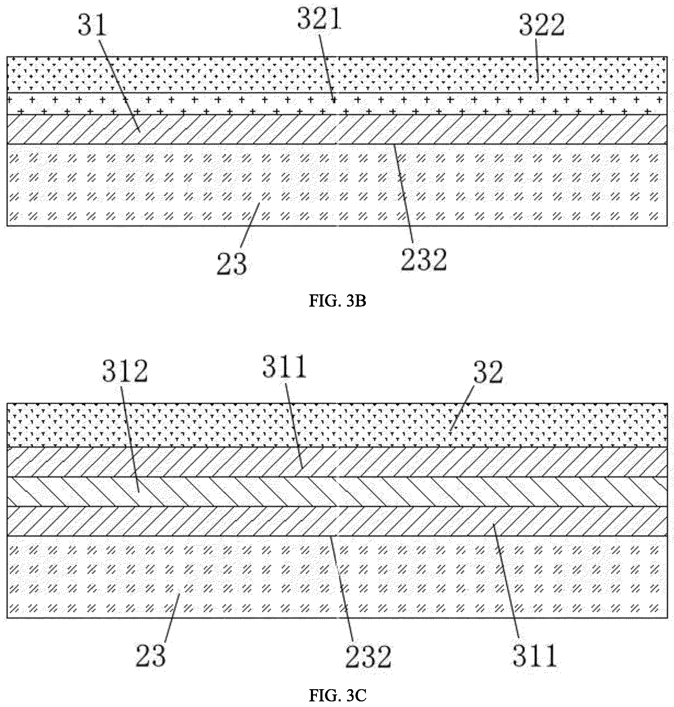

In the laminated structure consisting of the high refractive-index layer 31 and the low refractive-index layer 32, the high refractive-index layer 31 and/or the low refractive-index layer 32 may further include at least two sub-layers, i.e., the high refractive-index layer 31 includes at least two high refractive-index sub-layers, and the low refractive-index layer 32 includes at least two low refractive-index sub-layers. As illustrated in FIG. 3A, for example, the high refractive-index layer 31 includes a first high refractive-index sub-layer 311 and a second high refractive-index sub-layer 312, i.e., the inner glass pane 23/the first high refractive-index sub-layer 311/the second high refractive-index sub-layer 312/the low refractive-index layer 32. Preferably, a sub-layer in the high refractive-index layer 31 close to the inner glass pane 23, i.e., the first high refractive-index sub-layer 311, has a refractive index lower than a sub-layer in the high refractive-index layer 31 away from the inner glass pane 23, i.e., the second high refractive-index sub-layer 312. As illustrated in FIG. 3B, for example, the low refractive-index layer 32 includes a first low refractive-index layer 321 and a second low refractive-index layer 322, i.e., the inner glass pane 23/the high refractive-index layer 31/the first low refractive-index sub-layer 321/the second low refractive-index layer 322. For another example, the high refractive-index layer 31 includes a first high refractive-index sub-layer and a second high refractive-index sub-layer, and the low refractive-index layer 32 includes a first low refractive-index sub-layer and a second low refractive-index sub-layer, i.e., the inner glass pane 23/the first high refractive-index sub-layer/the second high refractive-index sub-layer/the first low refractive-index sub-layer/the second low refractive-index sub-layer.

If the high refractive-index layer 31 includes at least two high refractive-index sub-layers, preferably, at least one of the at least two high refractive-index sub-layers has a refractive index greater than or equal to 2.5, and at least another of the at least two high refractive-index sub-layers has a refractive index ranging from 1.8 to 2.2, where the at least another high refractive-index sub-layer with the refractive index ranging from 1.8 to 2.2 is more closer to the fourth surface 232 of the inner glass pane 23 than the at least one high refractive-index sub-layer with the refractive index greater than or equal to 2.5. As illustrated in FIG. 3C, for example, the high refractive-index layer 31 includes three high refractive-index sub-layers, i.e., two first high refractive-index sub-layers 311 and one second high refractive-index sub-layer 312. Each of the two first high refractive-index sub-layers 311 has a refractive index ranging from 1.8 to 2.2, and the second high refractive-index sub-layer 312 has a refractive index greater than or equal to 2.5. The second high refractive-index sub-layer 312 is disposed between the two first high refractive-index sub-layers 311. That is, a specific structure of the high refractive-index layer 31 is the first high refractive-index sub-layer 311/the second high refractive-index sub-layer 312/the first high refractive-index sub-layer 311. Preferably, the refractive index of the second high refractive-index sub-layer 312 is at least 0.5 greater than that of each of the two first high refractive-index sub-layers 311, thereby reflecting more P-polarized light to obtain higher-quality Head up display images.

For better eliminating deficiencies of Head up display images such as being reddish or yellowish, in the disclosure, preferably, in the P-polarized light 11 incident on the transparent nano film 3, a ratio of proportion T1 of near-red light with the wavelengths ranging from 580 nm to 680 nm to proportion T2 of near-blue light with the wavelengths ranging from 420 nm to 470 nm is T1/T2=0.1~0.9, such as 0.1, 0.2, 0.3, 0.4, 0.5, 0.6, 0.7, 0.8, or 0.9, more preferably T1/T2=0.4~0.8. According to a chromaticity theory, tri-stimulus values X, Y, Z of a color of any object R ($\lambda$) under a given illumination source S ($\lambda$) satisfy the following expressions:

$$X = k \int_{380}^{780} S(\lambda) * R(\lambda) * \bar{X}(\lambda) * d\lambda$$

$$Y = k \int_{380}^{780} S(\lambda) * R(\lambda) * \bar{Y}(\lambda) * d\lambda$$

$$Z = k \int_{380}^{780} S(\lambda) * R(\lambda) * \bar{Z}(\lambda) * d\lambda \quad ,$$

where k is an adjustment factor, R($\lambda$) is a spectral reflectivity of an object, S($\lambda$) is relative spectral power distribution of a light source, $\bar{X}(\lambda)$, $\bar{Y}(\lambda)$, and $\bar{Z}(\lambda)$ are spectral tri-stimulus values calculated from the international commission on illumination (CIE) standard observer, and d$\lambda$ is a wavelength interval. As can be known from the above expressions, in the disclosure, relative spectral power distribution of the P-polarized light 11 incident on the transparent nano film 3 is improved on the basis of the ratio R1/R2 of near-red light reflectivity R1 of the laminated glass 2 with the transparent nano film 3 to near-blue light reflectivity R2 of the laminated glass 2 with the transparent nano film 3, thereby eliminating deficiencies of Head up display images such as being reddish or yellowish, and generating the Head up display images in neutral color, and thus the Head up display images can be more colorful to implement full-color display, for example, to display marks or symbols in different colors such as red, green, blue, yellow, orange, or white in a Head up display image at the same time. Moreover, in the disclosure, full-color display can be implemented without strict control of a ratio of synthetic light in a projection light source, thereby implementing full-color display at a lower cost and reducing a cost of a selected projection light source.

For improving the relative spectral power distribution of the P-polarized light 11 incident on the transparent nano film 3, in the disclosure, preferably, the Head up display system further includes a light-filtering component and/or is configured to perform a color filtering processing algorithm, which are used to make the ratio of proportion T1 of near-red light with the wavelengths ranging from 580 nm to 680 nm in the P-polarized light 11 incident on the transparent nano film 3 to proportion T2 of near-blue light with the wavelengths ranging from 420 nm to 470 nm in the P-polarized light 11 incident on the transparent nano film 3 to be T1/T2=0.1~0.9. The light-filtering component is located on an optical path of the P-polarized light, and the light-filtering component has a transmittance for the P-polarized light greater than or equal to 80 %. For example, the light-filtering component may be a filter, a filter film, a film, a filter lens, or a micro-nano array. The light-filtering component can be located at an inside of the projection light source 1 or between the projection light source 1 and the laminated glass 2. The Head up display system further includes a projection control system, the projection control system is used to control the projection light source 1 to generate the P-polarized light 11, and the projection control system can perform a color filtering processing algorithm. The P-polarized light 11 generated by the projection light source 1 is processed with the color filtering processing algorithm in a digital image processing technology, where the color filtering processing algorithm may exemplarily be a linear method, a non-linear method, a masking method, a color compensation method, or a color correction method.

For satisfying safety requirements for use of vehicle glasses, the outer glass pane 21 is a bent glass pane with a thickness greater than or equal to 1.8 mm, e.g., the bent glass pane is obtained through high-temperature heat treatment of at least 560°C and bending molding. The inner glass pane 23 can also be a bent glass pane through high-temperature heat treatment of at least 560°C and bending molding. From a perspective of automotive light-weighting, the inner glass pane 23 is preferably a bent glass pane with a thickness less than or equal to 1.6 mm. In the disclosure, it is further found that a better Head up display effect can be obtained by using a thinner inner glass pane 23 when the transparent nano film 3 is deposited on the fourth surface 232 of the inner glass pane 23. The inner glass pane 23 preferably has a thickness ranging from 0.7 mm to 1.2 mm. The inner glass pane 23 may be made of chemically strengthened soda-lime-silica glass, chemically strengthened aluminosilicate glass, chemically strengthened borosilicate glass, body strengthened soda lime silicate glass, body strengthened aluminosilicate glass, or body strengthened borosilicate glass. In the disclosure, the chemical strengthening is mainly to produce a higher surface stress on a glass surface accompanied with a certain stress layer depth through exchange of ions with different ionic radii on the glass surface, thereby improving a strength of the glass in terms of mechanical property. In the disclosure, the body strengthened glass refers to raw glass that is neither physically nor chemically strengthened and can be directly matched with another glass to form laminated glass, where quality of the laminated glass meets a standard of automotive laminated glasses, such as GB9656-2016 Automotive Safety Glass in China.

Embodiments

The following will list some embodiments of the disclosure for further illustration, where the disclosure is not limited to the following embodiments.

The following will illustrate Head up display systems in embodiments 1 to 15 and Head up display systems in comparative embodiments 1 to 3 of the disclosure. In each of embodiments 1 to 15 and comparative embodiments 1 to 3, a projection light source is a thin transistor film-liquid crystal display (TFT-LCD) projector with LED backlight, which can generate P-polarized light and further includes multiple reflection mirrors. A display image that can be observed by an observer can be the most clear by adjusting a position of the projection light source and an incident direction of exited light.

In the P-polarized light 11 incident on the transparent nano film 3, T1 is a proportion of near-red light with the wavelengths ranging from 580 nm to 680 nm, and T2 is a proportion of near-blue light with the wavelengths ranging from 420 nm to 470 nm, where T1 and T2 are calculated respectively according to the following expressions:

$$T1 = \frac{k \int_{580}^{680} S(\lambda) * (\bar{X}(\lambda) + \bar{Y}(\lambda) + \bar{Z}(\lambda)) * d\lambda}{k \int_{380}^{780} S(\lambda) * (\bar{X}(\lambda) + \bar{Y}(\lambda) + \bar{Z}(\lambda)) * d\lambda}$$

$$T2 = \frac{k \int_{420}^{470} S(\lambda) * (\bar{X}(\lambda) + \bar{Y}(\lambda) + \bar{Z}(\lambda)) * d\lambda}{k \int_{380}^{780} S(\lambda) * (\bar{X}(\lambda) + \bar{Y}(\lambda) + \bar{Z}(\lambda)) * d\lambda} ,$$

where k is an adjustment factor, $R(\lambda)$ is a spectral reflectivity of an object, $S(\lambda)$ is relative spectral power distribution of a light source, $\bar{X}(\lambda)$, $\bar{Y}(\lambda)$, and $\bar{Z}(\lambda)$ are spectral tri-stimulus values calculated from the CIE standard observer, and $d\lambda$ is a wavelength interval.

R1 is a near-red light reflectivity at the wavelengths ranging from 580 nm to 680 nm of the laminated glass with the transparent nano film 3, and R2 is near-blue light reflectivity at wavelengths ranging from 420 nm to 470 nm of the laminated glass with the transparent nano film 3, where R1 and R2 are measured and calculated according to international organization for standardization (ISO) 9050.

Embodiments 1 to 5 and comparative embodiment 1

In the disclosure, embodiments 1 to 5 and comparative embodiment 1 are obtained by designing a film structure of the transparent nano film and adjusting a value of T1/T2 of the P-polarized light incident on the transparent nano film.

Laminated glass: green glass (2.1 mm)/PVB (0.76 mm)/clear glass (2.1 mm)/transparent nano film
Transparent nano film: clear glass/SiN (41.4 nm)/TiO$_x$ (48.9 nm)/SiN (13.3 nm)/SiO$_2$ (112 nm)

Embodiment 1: T1/T2 of the P-polarized light incident is equal to 0.8.
Embodiment 2: T1/T2 of the P-polarized light incident is equal to 0.7.
Embodiment 3: T1/T2 of the P-polarized light incident is equal to 0.6.
Embodiment 4: T1/T2 of the P-polarized light incident is equal to 0.5.
Embodiment 5: T1/T2 of the P-polarized light incident is equal to 0.4.
Comparative embodiment 1: the P-polarized light incident is white light generated by the projection light source without light filtering or color filtering processing.

In embodiments 1 to 5 and comparative embodiment 1, the Head up display system projects the P-polarized light generated by the projection light source at an angle of incidence of 55°, 60°, 65°, 70°, and 75°. A target image presented is observed from a direction of an angle of reflection corresponding to the angle of incidence. Whether a Head up display image is reddish or yellowish is determined according to a standard that the target image is a white facula, and a red-green-blue (RGB) value of the white facula is (255, 255, 255). Observation results are recorded in Table 1.

Table 1: quality of Head up display images in embodiments 1 to 5 and comparative embodiment 1

| angle of incidence | R1/R2 | comparative embodiment 1 | embodiment 1 | embodiment 2 | embodiment 3 | embodiment 4 | embodiment 5 |
|---|---|---|---|---|---|---|---|
| 55° | 1.72 | reddish-yellowish | white | white | white | white | white |
| 60° | 1.90 | reddish-yellowish | slightly yellowish | white | white | white | white |
| 65° | 1.77 | reddish-yellowish | slightly yellowish | white | white | white | white |
| 70° | 1.51 | Severe yellowish | white | white | white | white | white |
| 75° | 1.29 | Severe yellowish | white | white | white | white | white |

As can be seen from Table 1, R1/R2 of the laminated glass with the transparent nano film ranges from 1.29 to 1.90. In comparative embodiment 1, the target image is presented in reddish-yellowish or severe yellowish when the white light generated by the projection light source without light filtering or color filtering processing is incident at 55°, 60°, 65°, 70°, and 75°. In embodiments 1 to 5, the target image is presented as the standard white facula without being reddish or yellowish by using P-polarized light incident with T1/T2 ranging from 0.4 to 0.8. In embodiment 1, the target image is presented in slightly yellowish when the P-polarized light is incident at 60° and 65°, but being reddish is significantly eliminated, and being slightly yellowish will not affect an observation effect of Head up display images.

Embodiments 6 to 10 and comparative embodiment 2

In the disclosure, embodiments 6 to 10 and comparative embodiment 2 are obtained by designing a film structure of the transparent nano film and adjusting a value of T1/T2 of the P-polarized light incident on the transparent nano film.

Laminated glass: green glass (2.1 mm)/PVB (0.76 mm)/clear glass (0.7 mm)/transparent nano film
Transparent nano film: clear glass/$ZnSnO_x$ (24.8 nm)/$SiO_2$ (13.8 nm)/ZrN (10.2 nm)/$TiO_x$ (51.7 nm)/ZrN (13 nm)/$SiO_2$ (116 nm)

Embodiment 6: T1/T2 of the P-polarized light incident is equal to 0.8.
Embodiment 7: T1/T2 of the P-polarized light incident is equal to 0.7.
Embodiment 8: T1/T2 of the P-polarized light incident is equal to 0.6.
Embodiment 9: T1/T2 of the P-polarized light incident is equal to 0.5.
Embodiment 10: T1/T2 of the P-polarized light incident is equal to 0.4.
Comparative embodiment 2: the P-polarized light incident is white light generated by the projection light source without light filtering or color filtering processing.
In embodiments 6 to 10 and comparative embodiment 2, the Head up display system projects the P-polarized light generated by the projection light source at an angle of incidence of 55°, 60°, 65°, 70°, and 75°. A target image presented is observed from a direction of an angle of reflection corresponding to the angle of incidence. Whether a Head up display image is reddish or yellowish is determined according to a standard that the target image is a white facula, and an RGB value of the white facula is (255, 255, 255). Observation results are recorded in Table 2.

Table 2: quality of Head up display images in embodiments 6 to 10 and comparative embodiment 2

| angle of incidence | R1/R2 | comparative embodiment 2 | embodiment 6 | embodiment 7 | embodiment 8 | embodiment 9 | embodiment 10 |
|---|---|---|---|---|---|---|---|
| 55° | 1.41 | Severe yellowish | white | white | white | white | white |
| 60° | 1.47 | Severe yellowish | slightly yellowish | white | white | white | white |
| 65° | 1.38 | Severe yellowish | slightly yellowish | white | white | white | white |
| 70° | 1.25 | Severe yellowish | white | white | white | white | white |
| 75° | 1.14 | Severe yellowish | white | white | white | white | white |

As can be seen from Table 2, R1/R2 of the laminated glass with the transparent nano film ranges from 1.14 to 1.47. In comparative embodiment 2, the target image is presented in severe yellowish when the white light generated by the projection light source without light filtering or color filtering processing is incident at 55°, 60°, 65°, 70°, and 75°. In embodiments 6 to 10, the target image is presented as the standard white facula without being yellowish by using P-polarized light incident with T1/T2 ranging from 0.4 to 0.8. In embodiment 6, the target image is presented in slightly yellowish when the P-polarized light is incident at 60° and 65°, but being slightly yellowish will not affect an observation effect of Head up display images.

Embodiments 11 to 15 and comparative embodiment 3

In the disclosure, embodiments 11 to 15 and comparative embodiment 3 are obtained by designing a film structure of the transparent nano film and adjusting a value of T1/T2 of the P-polarized light incident on the transparent nano film.

Laminated glass: green glass (2.1 mm)/PVB (0.76 mm)/clear glass (1.6 mm)/transparent nano film
Transparent nano film: clear glass/SiN (15.4 nm)/$TiO_x$ (35.1 nm)/$SiO_2$ (14.5 nm)/$TiO_x$ (9.4 nm)/SiN (9.0 nm)/$SiO_2$ (108.4 nm)

Embodiment 11: T1/T2 of the P-polarized light incident is equal to 0.8.
Embodiment 12: T1/T2 of the P-polarized light incident is equal to 0.7.
Embodiment 13: T1/T2 of the P-polarized light incident is equal to 0.6.
Embodiment 14: T1/T2 of the P-polarized light incident is equal to 0.5.
Embodiment 15: T1/T2 of the P-polarized light incident is equal to 0.4.
Comparative embodiment 3: the P-polarized light incident is white light generated by the projection light source without light filtering or color filtering processing.
In embodiments 11 to 15 and comparative embodiment 3, the Head up display system projects the P-polarized light generated by the projection light source at an angle of incidence of 55°, 60°, 65°, 70°, and 75°. A target image presented is observed from a direction of an angle of reflection corresponding to the angle of incidence. Whether a Head up display image is reddish or yellowish is determined according to a standard that the target image is a white facula, and an RGB value of the white facula is (255, 255, 255). Observation results are recorded in Table 3.

Table 3: quality of Head up display images in embodiments 11 to 15 and comparative embodiment 3

| angle of incidence | R1/R2 | comparative embodiment 3 | embodiment 11 | embodiment 12 | embodiment 13 | embodiment 14 | embodiment 15 |
|---|---|---|---|---|---|---|---|
| 55° | 1.14 | Severe yellowish | white | white | white | white | white |
| 60° | 1.25 | Severe yellowish | white | white | white | white | white |

**EP 4 266 112 B1**

(continued)

| angle of incidence | R1/R2 | comparative embodiment 3 | embodiment 11 | embodiment 12 | embodiment 13 | embodiment 14 | embodiment 15 |
|---|---|---|---|---|---|---|---|
| 65° | 1.23 | Severe yellowish | white | white | white | white | white |
| 70° | 1.15 | Severe yellowish | white | white | white | white | white |
| 75° | 1.07 | Severe yellowish | white | white | white | white | white |

As can be seen from Table 3, R1/R2 of the laminated glass with the transparent nano film ranges from 1.07 to 1.25. In comparative embodiment 3, the target image is presented in severe yellowish when the white light generated by the projection light source without light filtering or color filtering processing is incident at 55°, 60°, 65°, 70°, and 75°. In embodiments 11 to 15, the target image is presented as the standard white facula without being yellowish by using P-polarized light incident with T1/T2 ranging from 0.4 to 0.8.

The above specifically illustrates the Head up display system in the disclosure, and contents of the specific implementations illustrated above are not to limit the disclosure.


**Claims**

1.  A head up display system, comprising:

    a projection light source (1);
    laminated glass (2) comprising an outer glass pane (21), an inner glass pane (23), and an intermediate adhesive layer (22) sandwiched between the outer glass pane (21) and the inner glass pane (23); and
    a transparent nano film (3) deposited on a surface (232) of the inner glass pane (23) away from the intermediate adhesive layer (22) and comprising at least one laminated structure each consisting of a high refractive-index layer (31) and a low refractive-index layer (32), wherein the high refractive-index layer (31) and the low refractive-index layer (32) are deposited sequentially outwards from the surface (232) of the inner glass pane (23), the high refractive-index layer (31) has a refractive index greater than or equal to 1.8, and the low refractive-index layer (32) has a refractive index less than or equal to 1.6, wherein
    the projection light source (1) is configured to generate P-polarized light (11), the P-polarized light (11) is incident on the transparent nano film (3) at an angle of incidence ranging from 55° to 75°, **characterized in that**
    the laminated glass (2) with the transparent nano film (3) has a reflectivity for the P-polarized light (11) greater than or equal to 15%;
    for the laminated glass (2) with the transparent nano film (3), a ratio of near-red light reflectivity R1 for near-red light with wavelengths ranging from 580 nm to 680 nm to near-blue light reflectivity R2 for near-blue light with wavelengths ranging from 420 nm to 470 nm is R1/R2=1.0~2.0, wherein the near-red light reflectivity R1 and the near-blue light reflectivity R2 are measured and calculated according to international organization for standardization (ISO) 9050; and
    in the P-polarized light (11) incident on the transparent nano film (3), a ratio of proportion T1 of near-red light with the wavelengths ranging from 580 nm to 680 nm to proportion T2 of near-blue light with the wavelengths ranging from 420 nm to 470 nm is T1/T2=0.1~0.9.

2.  The head up display system of claim 1, wherein the intermediate adhesive layer (22) has a wedge-shaped cross-sectional profile, and the wedge-shaped cross-sectional profile has a wedge angle ranging from 0.01 milli-radians, mrad, to 0.18 mrad.

3.  The head up display system of claim 1, wherein the laminated glass (2) with the transparent nano film (3) has the reflectivity for the P-polarized light (11) greater than or equal to 15%.

4.  The head up display system of claim 1, wherein the laminated glass (2) with the transparent nano film (3) has the reflectivity for the P-polarized light (11) greater than or equal to 20%.

11

5. The head up display system of claim 1, wherein at least one high refractive-index layer (31) has a refractive index greater than or equal to 2.5 and a thickness ranging from 45 nm to 75 nm.

6. The head up display system of claim 1, wherein at least one high refractive-index layer (31) comprises at least two high refractive-index sub-layers (311, 312), at least one of the at least two high refractive-index sub-layers has a refractive index greater than or equal to 2.5, and at least another of the at least two high refractive-index sub-layers has a refractive index ranging from 1.8 to 2.2.

7. The head up display system of claim 1, wherein at least one high refractive-index layer (31) comprises two first high refractive-index sub-layers (311) and one second high refractive-index sub-layer (312) disposed between the two first high refractive-index sub-layers (311), each of the two first high refractive-index sub-layers (311) has a refractive index ranging from 1.8 to 2.2, the second high refractive-index sub-layer (312) has a refractive index greater than or equal to 2.5.

8. The head up display system of claim 7, wherein the refractive index of the second high refractive-index sub-layer (312) is at least 0.5 greater than the refractive index of each of the two first high refractive-index sub-layers (311).

9. The head up display system of claim 1, wherein in the P-polarized light (11) incident on the transparent nano film (3), a ratio of proportion T1 of near-red light with the wavelengths ranging from 580 nm to 680 nm to proportion T2 of near-blue light with the wavelengths ranging from 420 nm to 470 nm is T1/T2=0.4~0.8.

10. The head up display system of claim 1, further comprising a light-filtering component, wherein the light-filtering component is located on an optical path of the P-polarized light (11), and the light-filtering component has a transmittance for the P-polarized light (11) greater than or equal to 80 %.

11. The head up display system of claim 1, further comprising a projection control system configured to:

   control the projection light source (1) to generate the P-polarized light (11); and
   perform a color filtering algorithm on the P-polarized light (11) generated from the projection light source (1).

12. The head up display system of claim 1, wherein the outer glass pane (21) is a bent glass pane with a thickness greater than or equal to 1.8 mm, and the inner glass pane (23) is a bent glass pane with a thickness less than or equal to 1.6 mm.

13. The head up display system of claim 1, wherein the inner glass pane (23) has a thickness ranging from 0.7 mm to 1.2 mm, and the inner glass pane (23) is made of chemically strengthened soda-lime-silica glass, chemically strengthened aluminosilicate glass, chemically strengthened borosilicate glass, body strengthened soda lime silicate glass, body strengthened aluminosilicate glass, or body strengthened borosilicate glass.

14. The head up display system of claim 1, wherein the ratio of the near-red light reflectivity R1 to the near-blue light reflectivity R2 is R1/R2=1.07~1.9.

**Patentansprüche**

1. Head-up-Anzeigesystem, umfassend:

   eine Projektionslichtquelle (1);
   laminiertes Glas (2), umfassend eine äußere Glasscheibe (21), eine innere Glasscheibe (23) und eine Haftmittelzwischenschicht (22), die zwischen der äußeren Glasscheibe (21) und der inneren Glasscheibe (23) sandwichartig angeordnet ist; und
   einen transparenten Nanofilm (3), der auf einer von der Haftmittelzwischenschicht (22) abgewandten Oberfläche (232) der inneren Glasscheibe (23) aufgebracht ist und zumindest eine laminierte Struktur umfasst, die jeweils aus einer Schicht (31) mit hohem Brechungsindex und einer Schicht (32) mit niedrigem Brechungsindex besteht/bestehen, wobei die Schicht (31) mit hohem Brechungsindex und die Schicht (32) mit niedrigem Brechungsindex von der Oberfläche (232) der inneren Glasscheibe (23) nach außen nacheinander abgeschieden sind, wobei die Schicht (31) mit hohem Brechungsindex einen Brechungsindex von größer oder gleich 1,8 aufweist und die Schicht (32) mit niedrigem Brechungsindex einen Brechungsindex von kleiner oder gleich 1,6 aufweist, wobei

die Projektionslichtquelle (1) dazu ausgelegt ist, um P-polarisiertes Licht (11) zu erzeugen, wobei das P-polarisierte Licht (11) auf den transparenten Nanofilm (3) in einem Einfallswinkel im Bereich von 55° bis 75° einfällt, **dadurch gekennzeichnet, dass**

das laminierte Glas (2) mit dem transparenten Nanofilm (3) ein Reflexionsvermögen in Bezug auf das P-polarisierte Licht (11) von größer oder gleich 15 % aufweist;

für das laminierte Glas (2) mit dem transparenten Nanofilm (3) ein Verhältnis eines Nah-Rotlicht-Reflexionsvermögens R1 für Nah-Rotlicht mit Wellenlängen im Bereich von 580 nm bis 680 nm zu einem Nah-Blau-Reflexionsvermögen R2 für Nah-Blaulicht mit Wellenlängen im Bereich von 420 nm bis 470 nm R1/R2=1,0-2,0 beträgt, wobei das Nah-Rotlicht-Reflexionsvermögen R1 und das Nah-Blau-Reflexionsvermögen R2 gemäß Internationaler Organisation für Normung (ISO) 9050 gemessen und berechnet werden; und

im P-polarisierten Licht (11), das auf den transparenten Nanofilm (3) einfällt, ein Verhältnis eines Anteils T1 von Nah-Rotlicht mit Wellenlängen im Bereich von 580 nm bis 680 nm zu einem Anteil T2 von Nah-Blaulicht mit Wellenlängen im Bereich von 420 nm bis 470 nm T1/T2=0,1~0,9 beträgt.

2. Head-up-Anzeigesystem nach Anspruch 1, wobei die Haftmittelzwischenschicht (22) ein keilförmiges Querschnittsprofil aufweist und das keilförmige Querschnittsprofil einen Keilwinkel im Bereich von 0,01 Milliradian, mrad, bis 0,18 mrad aufweist.

3. Head-up-Anzeigesystem nach Anspruch 1, wobei das laminierte Glas (2) mit dem transparenten Nanofilm (3) ein Reflexionsvermögen in Bezug auf das P-polarisierte Licht (11) von größer oder gleich 15 % aufweist.

4. Head-up-Anzeigesystem nach Anspruch 1, wobei das laminierte Glas (2) mit dem transparenten Nanofilm (3) ein Reflexionsvermögen in Bezug auf das P-polarisierte Licht (11) von größer oder gleich 20 % aufweist.

5. Head-up-Anzeigesystem nach Anspruch 1, wobei zumindest eine Schicht (31) mit hohem Brechungsindex einen Brechungsindex von größer oder gleich 2,5 und eine Dicke im Bereich von 45 nm bis 75 nm aufweist.

6. Head-up-Anzeigesystem nach Anspruch 1, wobei zumindest eine Schicht (31) mit hohem Brechungsindex zumindest zwei Teilschichten (311, 312) mit hohem Brechungsindex aufweist, wobei zumindest eine aus den zumindest zwei Teilschichten mit hohem Brechungsindex einen Brechungsindex von größer oder gleich 2,5 aufweist und zumindest eine andere aus den zumindest zwei Teilschichten mit hohem Brechungsindex einen Brechungsindex im Bereich von 1,8 bis 2,2 aufweist.

7. Head-up-Anzeigesystem nach Anspruch 1, wobei zumindest eine Schicht (31) mit hohem Brechungsindex zwei erste Teilschichten (311) mit hohem Brechungsindex und eine zweite Teilschicht (312) mit hohem Brechungsindex, die zwischen den zwei ersten Teilschichten (311) mit hohem Brechungsindex angeordnet ist, umfasst, wobei jede aus den zwei ersten Teilschichten (311) mit hohem Brechungsindex einen Brechungsindex im Bereich von 1,8 bis 2,2 aufweist, wobei die zweite Teilschicht (312) mit hohem Brechungsindex einen Brechungsindex von größer oder gleich 2,5 aufweist.

8. Head-up-Anzeigesystem nach Anspruch 7, wobei der Brechungsindex der zweiten Teilschicht (312) mit hohem Brechungsindex zumindest 0,5-mal größer ist als der Brechungsindex von jeder aus den zwei ersten Teilschichten (311) mit hohem Brechungsindex.

9. Head-up-Anzeigesystem nach Anspruch 1, wobei im P-polarisierten Licht (11), das auf den transparenten Nanofilm (3) einfällt, ein Verhältnis eines Anteils T1 von Nah-Rotlicht mit Wellenlängen im Bereich von 580 nm bis 680 nm zu einem Anteil T2 von Nah-Blaulicht mit Wellenlängen im Bereich von 420 nm bis 470 nm T1/T2=0,4-0,8 beträgt.

10. Head-up-Anzeigesystem nach Anspruch 1, ferner umfassend eine Lichtfilterkomponente, wobei die Lichtfilterkomponente auf einem optischen Pfad des P-polarisierten Lichts (11) angeordnet ist und die Lichtfilterkomponente eine Durchlässigkeit für das P-polarisierte Licht (11) von größer oder gleich 80 % aufweist.

11. Head-up-Anzeigesystem nach Anspruch 1, ferner umfassend ein Projektionssteuerungssystem, das für Folgendes ausgelegt ist:

Steuern der Projektionslichtquelle (1), um das P-polarisierte Licht (11) zu erzeugen; und
Durchführen eines Farbfilteralgorithmus an dem P-polarisierten Licht (11), das von der Projektionslichtquelle (1) erzeugt wurde.

12. Head-up-Anzeigesystem nach Anspruch 1, wobei die äußere Glasscheibe (21) eine gebogene Glasscheibe mit einer Dicke von größer oder gleich 1,8 mm ist und die innere Glasscheibe (23) eine gebogene Glasscheibe mit einer Dicke von kleiner oder gleich 1,6 mm ist.

13. Head-up-Anzeigesystem nach Anspruch 1, wobei die innere Glasscheibe (23) eine Dicke im Bereich von 0,7 mm bis 1,2 mm aufweist und die innere Glasscheibe (23) aus chemisch verstärktem Natronkalksilicatglas, chemisch verstärktem Aluminiumsilicatglas, chemisch verstärktem Borsilicatglas, körperverstärktem Natronkalksilicatglas, körperverstärktem Aluminiumsilicatglas oder körperverstärktem Borsilicatglas besteht.

14. Head-up-Anzeigesystem nach Anspruch 1, wobei das Verhältnis des Nah-Rotlicht-Reflexionsvermögens R1 zum Nah-Blaulicht-Reflexionsvermögen R2 R1/R2=1,07-1,9 beträgt.

## Revendications

1. Système d'affichage tête haute, comprenant :

une source de lumière de projection (1) ;
un verre feuilleté (2) comprenant une plaque de verre externe (21), une plaque de verre interne (21) et une couche adhésive intermédiaire (22) enserrée entre la plaque de verre externe (21) et la plaque de verre interne (21) ; et
un nanofilm transparent (3) déposé sur une surface (232) de la plaque de verre interne (23) à l'écart de la couche adhésive intermédiaire (22) et comprenant au moins une structure stratifiée constituée chacune d'une couche à indice de réfraction élevé (31) et d'une couche à indice de réfraction bas (32), dans lequel la couche à indice de réfraction élevé (31) et la couche à indice de réfraction bas (32) sont déposées séquentiellement vers l'extérieur à partir de la surface (232) de la plaque de verre interne (23) vers l'extérieur, la couche à indice de réfraction élevé (31) présente un indice de réfraction supérieur ou égal à 1,8, et la couche à indice de réfraction bas (32) présente un indice de réfraction inférieur ou égal à 1,6, dans lequel
la source de lumière de projection (1) est configurée pour générer une lumière polarisée P (11), la lumière polarisée P (11) est incidente sur le nanofilm transparent (3) selon un angle d'incidence allant de 55° à 75°, **caractérisé en ce que**
le verre feuilleté (2) avec le nanofilm transparent (3) présente une réflectivité pour la lumière polarisée P (11) supérieure ou égale à 15 % ;
pour le verre feuilleté (2) avec le nanofilm transparent (3), un rapport de la réflectivité de la lumière proche du rouge R1 pour la lumière proche du rouge avec des longueurs d'onde allant de 580 nm à 680 nm à la réflectivité de la lumière proche du bleu R2 pour la lumière proche du bleu avec des longueurs d'onde allant de 420 nm à 470 nm est R1/R2=1,0 ~ 2,0, dans lequel la réflectivité de la lumière proche du rouge R1 et la réflectivité de la lumière proche du bleu R2 sont mesurées et calculées selon l'organisation internationale de normalisation (ISO) 9050 ; et
dans la lumière polarisée P (11) incidente sur le nanofilm transparent (3), un rapport de la proportion T1 de lumière proche du rouge avec les longueurs d'onde allant de 580 nm à 680 nm à la proportion T2 de lumière proche du bleue avec les longueurs d'onde allant de 420 nm à 470 nm est T1/T2= 0,1 ~ 0,9.

2. Système d'affichage tête haute selon la revendication 1, dans lequel la couche adhésive intermédiaire (22) présente un profil de section transversale cunéiforme, et le profil de section transversale cunéiforme présente un angle de coin allant de 0,01 milliradians, mrad, à 0,18 mrad.

3. Système d'affichage tête haute selon la revendication 1, dans lequel le verre feuilleté (2) avec le nanofilm transparent (3) présente la réflectivité pour la lumière polarisée P (11) supérieure ou égale à 15 %.

4. Système d'affichage tête haute selon la revendication 1, dans lequel le verre feuilleté (2) avec le nanofilm transparent (3) présente la réflectivité pour la lumière polarisée P (11) supérieure ou égale à 20 %.

5. Système d'affichage tête haute selon la revendication 1, dans lequel au moins une couche à indice de réfraction élevé (31) présente un indice de réfraction supérieur ou égal à 2,5 et une épaisseur dans une plage allant de 45 nm à 75 nm.

6. Système d'affichage tête haute selon la revendication 1, dans lequel au moins une couche à indice de réfraction élevé (31) comprend au moins deux sous-couches à indice de réfraction élevé (311, 312), au moins une des au moins deux sous-couches à indice de réfraction élevé présente un indice de réfraction supérieur ou égal à 2,5, et au moins une autre des au moins deux sous-couches à indice de réfraction élevé présente un indice de réfraction dans une plage allant de 1,8 à 2,2.

7. Système d'affichage tête haute selon la revendication 1, dans lequel au moins une couche à indice de réfraction élevé (31) comprend deux premières sous-couches à indice de réfraction élevé (311) et une seconde sous-couche à indice de réfraction élevé (312) disposée entre les deux premières sous-couches à indice de réfraction élevé (311), chacune des deux premières sous-couches à indice de réfraction élevé (311) présente un indice de réfraction dans une plage allant de 1,8 à 2,2, la seconde sous-couche à indice de réfraction élevé (312) présente un indice de réfraction supérieur ou égal à 2,5.

8. Système d'affichage tête haute selon la revendication 7, dans lequel l'indice de réfraction de la seconde sous-couche à indice de réfraction élevé (312) est au moins 0,5 supérieur à l'indice de réfraction de chacune des deux premières sous-couches à indice de réfraction élevé (311).

9. Système d'affichage tête haute selon la revendication 1, dans lequel dans la lumière polarisée P (11) incidente sur le nanofilm transparent (3), un rapport de proportion T1 de lumière proche du rouge avec les longueurs d'onde dans une plage allant de 580 nm à 680 nm à la proportion T2 de lumière proche du bleu avec les longueurs d'onde dans une plage allant de 420 nm à 470 nm est T1/T2=0,4 ~ 0,8.

10. Système d'affichage tête haute selon la revendication 1, comprenant en outre un composant de filtrage de lumière, dans lequel le composant de filtrage de lumière est situé sur un trajet optique de la lumière polarisée P (11), et le composant de filtrage de lumière présente une transmittance pour la lumière polarisée P (11) supérieure ou égale à 80 %.

11. Système d'affichage tête haute selon la revendication 1, comprenant en outre un système de commande de projection configuré pour :

commander la source de lumière de projection (1) pour générer la lumière polarisée P (11) ; et
effectuer un algorithme de filtrage des couleur sur la lumière polarisée P (11) générée à partir de la source de lumière de projection (1).

12. Système d'affichage tête haute selon la revendication 1, dans lequel la plaque de verre externe (21) est une plaque de verre cintrée d'une épaisseur supérieure ou égale à 1,8 mm, et la plaque de verre interne (21) est une plaque de verre cintrée d'une épaisseur inférieure ou égale à 1,6 mm.

13. Système d'affichage tête haute selon la revendication 1, dans lequel la plaque de verre interne (23) présente une épaisseur dans une plage allant de 0,7 mm à 1,2 mm, et la plaque de verre interne (23) est constitué de verre de silice sodo-calcique renforcé chimiquement, de verre d'aluminosilicate renforcé chimiquement, de verre de borosilicate renforcé chimiquement, de verre de silice sodocalcique renforcé par un corps, de verre d'aluminosilicate renforcé par un corps ou de verre de borosilicate renforcé par un corps.

14. Système d'affichage tête haute selon la revendication 1, dans lequel le rapport de la réflectivité de lumière proche du rouge R1 à la réflectivité de la lumière proche du bleu R2 est R1/R2= 1,07 ~ 1,9.

FIG. 1

31    32

23    232

FIG. 2A

32    31    32

23    232    31

FIG. 2B

31     32     32     32

23     232     31     32

FIG. 2C

311     312     32

23     232

FIG. 3A

31    321    322

23    232

FIG. 3B

312    311    32

23    232    311

FIG. 3C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105793033 B
- CN 111417518 A
- CN 110709359 A
- DE 102014220189 A1
- CN 110520782 A
- CN 111433022 A
- CN 111433023 A
- CN 104267498 A

**Non-patent literature cited in the description**

- Automotive Safety Glass in China. *GB9656-2016*